# EUROPÄISCHE PATENTANMELDUNG

(11) **EP 2 266 821 A1**
(43) Veröffentlichungstag der Anmeldung: **29.12.2010**
(21) Anmeldenummer: 10005990.6
(22) Anmeldetag: 10.06.2010
(51) Int. Cl.: B60G 7/00

(54) **Lenkanordnung und Verfahren zur Herstellung einer Lenkanordnung**

(30) Priorität: 16.06.2009 DE 102009025429
(71) Anmelder: Benteler Automobiltechnik GmbH, 33102 Paderborn (DE)
(72) Erfinder: Meding, Detlef, 33104 Paderborn (DE); Rowinski, Markus, 33014 Bad Diburg (DE); Koczar, Peter, 65205 Wiesbaden (DE)
(74) Vertreter: Griepenstroh, Jörg

(57) **Zusammenfassung**

Lenkeranordnung als Bestandteil einer Achskomponente mit einem als Hohlprofil ausgebildeten Lenker (1), wobei der Lenker (1) Lageraufnahmen (4, 5) aufweist, die jeweils von einem Paar fluchtender Öffnungen (13, 14) des Hohlprofils gebildet sind, wobei an den Öffnungen (13, 14) Durchzüge (16, 16') ausgebildet sind, die Lagertragflächen (17) zur Aufnahme eines Elastomer-Metall-Lagers (8) bilden. Das Elastomer-Metall-Lager (8) weist eine sich an den Lagertragflächen (17) abstützende Außenhülse (11) auf, die als offenes Hohlprofil ausgebildet ist. Es wird ein Verfahren zur Herstellung einer solchen Lenkeranordnung unter Verwendung einer Kalibriereinheit beim Einpressen des Elastomer-Metall-Lagers (8) beschrieben.

## Beschreibung

Die Erfindung betrifft eine Lenkeranordnung mit den Merkmalen im Oberbegriff des Patentanspruchs 1 sowie ein Verfahren zur Herstellung einer solchen Lenkeranordnung gemäß den Merkmalen des Patentanspruchs10.

Achskomponenten in Form von Zug-/Druckstreben kommen als Spurstangen, Lenker oder Koppelstäbe zum Einsatz. Spurstangen sind Teile des Fahrwerks und dienen zur Übertragung der Lenkkräfte und -bewegungen auf die drehbar bzw. schwenkbar gelagerten Radaufnahmen einer Fahrzeugachse. Während einer Fahrbewegung des Kraftfahrzeugs werden Massekräfte über das Rad, die Radaufnahmen und die Spurstangen in das Fahrwerk eines Kraftfahrzeugs eingeleitet. Hierbei kann es beispielsweise in Folge von Unwuchten am Rad zu nachteiligen Schwingungseinflüssen kommen. Aus diesem Grund erfolgt die Anbindung der Spurstangen im Fahrwerk über Elastomer-Metall-Lager.

Fahrwerkslenker haben die Funktion, das Rad kinematisch zu fixieren und haben wesentlichen Einfluss auf die Lenk- und Fahreigenschaften. Fahrwerkslenker mit separat anzuschweißenden Rohrabschnitten, in welche die Elastomer-Metall-Lager eingepresst werden, setzen eine Reihe von Fertigungsschritten und zusätzlichen Bauteilen voraus, so dass der Aufwand für derartige Lageraufnahmen relativ hoch ist.

Aus der DE 10 2006 028 713 B3 ist ein Verfahren zur Herstellung eines im Querschnitt U-förmigen Lenkers aus Blech für eine PKW-Mehrlenkerachse bekannt, bei welchem eine Blechschale als Formteil zweier spiegelbildlich zueinander angeordneten Teilschalen ausgebildet ist. An den beiden Enden der Blechschalen sind Lageraugen vorgesehen, die jeweils von einem Paar fluchtender Löcher in den Teilschalen gebildet sind. In derartige Lenker werden üblicherweise Elastomer-Metall-Lager mit umfangsseitig geschlossenen Außenhülsen eingesetzt. Es gibt jedoch auch Elastomer-Metall-Lager mit geschlitzten Außenhülsen, die allerdings nur in massive Lenkerquerschnitte, beispielsweise in geschmiedete Aluminiumquerlenker, eingesetzt werden, um eine hinreichende Abstützung für die weiche Bauweise des geschlitzten Elastomer-Metall-Lagers zu haben. Geschlitzte Elastomer-Metall-Lager werden daher bevorzugt in durchgehende Aufnahmebohrungen bzw. Buchsen eingesetzt, um eine hinreichende umfangsseitige Abstützung zu erfahren.

Damit die geschlitzten Elastomer-Metall-Lager eine höhere Dauerfestigkeit besitzen, müssen diese kalibriert werden. Das bedeutet, dass die längsgeschlitzte Außenhülse radial zusammengepresst wird, so dass die Vorspannung auf die angrenzende Elastomerlage erhöht wird. Dadurch können auch weichere Elastomere eingesetzt werden. Das Kalibrieren ist in der Regel ein separater Fertigungsschritt, der zusätzliche Kosten verursacht.

Hiervon ausgehend liegt der Erfindung die Aufgabe zu Grunde, eine kostengünstige Lenkeranordnung aufzuzeigen, bei welcher der Lenker aus einem Hohlprofil gebildet ist und bei welchem Einsparungen im Bereich des Elastomer-Metall-Lagers durch ein kostengünstiges Fertigungsverfahren realisiert werden.

Der gegenständliche Teil dieser Aufgabe wird durch eine Lenkeranordnung mit den Merkmalen des Patentanspruchs 1 gelöst.

Ein kostengünstiges Verfahren zur Herstellung einer solchen Lenkeranordnung ist Gegenstand des Patentanspruchs 10.

Die Unteransprüche betreffen vorteilhafte Weiterbildungen des Erfindungsgedankens.

Die erfindungsgemäße Lenkeranordnung umfasst einen als Hohlprofil ausgebildeten Lenker, wobei der Lenker Lageraufnahmen aufweist, die jeweils an einem Paar fluchtender Öffnungen des Hohlprofils gebildet sind. An den Öffnungen sind Durchzüge ausgebildet, die auch als Kragen bezeichnet werden können und welche Lagertragflächen zur Aufnahme eines Elastomer-Metall-Lagers bilden. Ein solches Elastomer-Metall-Lager stützt sich in der Einbaulage an den Lagertragflächen der gegenüberliegenden Öffnungen ab. Hierbei gelangt eine Außenhülse des Elastomer-Metall-Lagers in Kontakt mit den Lagertragflächen der Durchzüge.

Das Besondere bei der erfindungsgemäßen Lenkeranordnung ist, dass die Außenhülse umfangsseitig ein offenes Hohlprofil ist. Die Außenhülse ist insbesondere längsgeschlitzt. Es können ein oder mehrere Längsschlitze bzw. Umfangssegmente der Außenhülse vorgesehen sein. Ein Längsschlitz erstreckt sich von Stirnseite zu Stirnseite der Außenhülse. Er ist in seinem Verlauf nicht auf eine Gerade beschränkt. Wesentlich ist, dass die Außenhülse im Außendurchmesser ohne plastische Verformung reduzierbar ist. Der besondere Vorteil der erfindungsgemäßen Lenkeranordnung ist, dass die Außenhülse, die aus einem oder mehreren Teilen bestehen kann, beim Einpressen in die Öffnungen so stark zusammengedrückt wird, dass gleichzeitig eine Kalibrierung des Elastomer-Metall-Lagers erfolgt. Die Kalibrierung muss daher nicht in einem separaten Arbeitsschritt durchgeführt werden, sondern erfolgt unmittelbar beim Einpressen des Elastomer-Metall-Lagers in den Lenker.

Es ist bekannt, dass bei umfangsseitig geschlossenen Außenhülsen ein separater Kalibriervorgang unerlässlich ist, da beim Abkühlen von etwa 180 °C Vulkanisationstemperatur auf Umgebungsniveau beispielsweise Naturkautschuk wesentlich stärker schrumpft als Stahl, Aluminium oder auch Kunststoff, so dass Zugspannungen auftreten. Da sich Zugspannungen bei Elastomeren signifikant auf die Lebensdauer auswirken, werden Lagerbuchsen nach dem Abkühlen kalibriert und im Durchmesser reduziert, um zumindest die Schrumpfung zu neutralisieren. Bei Außenhülsen, die als offenes Hohlprofil ausgebildet sind, kann dahingegen eine Verformung und eine Druckspannung realisiert werden, die nicht nur zur Kompensation von Zugspannungen des Gummi-Elastomerwerkstoffs dient, sondern zusätzlich eine Vorspannung aufbringt, die dazu führt, dass das Elastomer-Metall-Lager höher belastbar ist und somit eine höhere Lebenserwartung erhält.

Versuche haben gezeigt, dass die Vorteile geschlitzter Elastomer-Metall-Lager auch dann zum Tragen kommen, wenn die Außenschale nicht über die volle Länge der Axialrichtung des Elastomer-Metall-Lagers unterstützt wird, sondern nur in Teilbereichen, wie es bei Lenkern aus Hohlprofilen der Fall ist. Bei den kostengünstigen Lenkern aus Hohlprofilen, die in der Regel aus Stahlblech hergestellt werden, können die Durchzüge und insbesondere die Länge der Lagertragflächen exakt auf das Elastomer-Metall-Lager abgestimmt werden. Andererseits kann die Außenhülse in ihrer Wanddicke so bemessen werden, dass sich die Außenhülse auch unter starker radialer Belastung nicht in unerwünschter Weise aufspreizt und die gewünschte Kraft-Weg-Kennlinie negativ beeinflusst. Auch in fertigungstechnischer Hinsicht ist die Verwendung geschlitzter Außenhülsen denkbar, obwohl beim Einpressen zwei im Abstand zueinander verlaufende Lagertragflächen kontaktiert werden müssen. Die Durchzüge, die in entgegengesetzte Richtung weisen, d.h. mit ihren freien Enden aufeinander zu weisen oder voneinander weg weisen bzw. nach innen oder außen umgestellt sind, sind bevorzugt so ausgebildet, dass an einem freien Ende wenigstens eines Durchzugs eine Einführschräge für ein einzupressendes Elastomer-Metall-Lager ausgebildet ist. Wenn beispielsweise beide Durchzüge nach innen gerichtet sind, ergibt sich an der Außenkante des einen Durchzugs zwangsläufig eine leichte Rundung, die das Einpressen des Elastomer-Metall-Lagers erleichtert. Wenn das Elastomer-Metall-Lager weiter eingepresst wird, stößt die Außenhülse auf das freie Ende des anderen Durchzugs. Damit es hier nicht zu Klemmungen kommt, ist an diesem Durchzug eine Einführschräge ausgebildet. Vorzugsweise ist dieser Durchzug an seinem freien Ende aufgetulpt, d.h. im Durchmesser erweitert ausgebildet.

Im umgekehrten Fall, wenn die Durchzüge jeweils nach außen gerichtet sind, so dass ihre freien Enden voneinander weg weisen, besitzen die Durchzüge eine innen liegende Einführschräge, wohingegen die scharfen Kanten der Durchzüge, d.h. die freien Enden, außen liegen. Derjenige Durchzug, der zuerst mit der Außenhülse des Elastomer-Metall-Lagers in Kontakt kommt, sollte daher ebenfalls mit einer Einführschräge versehen oder aufgetulpt sein.

Die Außenhülse des Elastomer-Metall-Lagers ist im Rahmen der Erfindung bevorzugt aus einem metallischen Werkstoff, beispielsweise einem Stahlwerkstoff hergestellt. Im Rahmen der Erfindung ist es jedoch auch vorstellbar, dass die Außenhülse aus einer Leichtmetalllegierung insbesondere einer Aluminiumlegierung hergestellt ist. Die Wandstärke bzw. die Dicke der Außenhülse ist im Rahmen der Erfindung in einem Bereich zwischen 1 und 3 mm ausgebildet. Bevorzugt wird im Falle einer Aluminiumlegierung eine Wanddicke von 1,5 bis 2,5 mm der Außenhülse gewählt. Bei Stahllegierungen werden Wanddickenbereiche zwischen 1 und 2 mm ausgebildet. Hierdurch ergibt sich insbesondere der Vorteil, dass das Elastomer-Metall-Lager auch bei einem Abstand von zwei Durchzügen sich nicht in seinem Durchmesser aufweitet. D.h. die Außenhülse bringt ein groß genügendes Widerstandsmoment auf, um der nach außen drückenden Kraft des Elastomers entgegenwirken zu können. Im Rahmen der Erfindung ergibt sich hierdurch insbesondere der Vorteil, dass das kalibrierte Elastomer-Metall-Lager auch in seinem Kalibrierzustand bleibt und nicht nach Einpressen oder nach einiger Zeit nach dem Einpressen durch die Aufweitkraft des Elastomers sich das Elastomer-Metall-Lager von alleine entkalibriert.

In einer weiteren bevorzugten Ausführungsvariante der vorliegenden Erfindung beträgt die Länge des freien Spaltes zwischen den Durchzügen maximal 20 mm. Bevorzugt wird eine Spaltbreite bis maximal 10 mm eingesetzt. Gerade bei großen Wandstärken der Außenhülse oder aber bei besonders festen Stahlwerkstoffen ist es möglich, eine erfindungsgemäße Lenkeranordnung mit Spaltbreiten von bis zu 20 mm zwischen den Durchzügen auszustatten. Bei kleineren Wandstärken der Außenhülse oder aber bei Leichtmetalllegierungen ergibt sich eine bevorzugte Ausführungsform der erfindungsgemäßen Lenkeranordnung bei Spaltbreiten von bis zu 10 mm oder weniger zwischen den beiden Durchzügen. Zum Einpressen der Elastomer-Metall-Lager weisen die Durchzüge bevorzugt Einführschrägen oder Fasen im Bereich der Einführung des Elastomer-Metall-Lagers auf. Besonders vorteilhaft haben sich hierfür Einführschrägen und Fasen in einem Bereich zwischen 20 und 40 Grad ergeben. Besonders bevorzugt in einem Bereich zwischen 25 und 35 Grad. Hierduch ist es besonders einfach, die Elastomer-Metall-Lager in die Durchzüge des Lenkers einzupressen. Insbesondere ergibt sich hierdurch ein weiterer Vorteil, da geschlitzte Elastomer-Metall-Lager mit einer Elastomerlagersteifigkeit von maximal 12 kN/mm einpressbar und gleichzeitig kalibrierbar sind.

Der Lenker besteht vorzugsweise aus einer einteiligen, im Querschnitt U-förmigen Blechschale, wobei die gegenüberliegenden Wände die fluchtenden Öffnungen zur Aufnahme des Elastomer-Metall-Lagers aufweisen. Über einen rückwärtigen Steg sind die zueinander beabstandeten Wände miteinander verbunden. Das U-förmige Profil erfährt durch die eingesetzten Elastomer-Metall-Lager und insbesondere durch die Außenhülse eine zusätzliche Versteifung.

Alternativ kann der Lenker aus einem umfangsseitig geschlossenen Rohrprofil bestehen. Dieses Rohrprofil besteht vorzugsweise aus einem nahtlos gezogenen Rohr, das in die gewünschte Querschnittskontur gepresst worden ist. Ein solcher Lenker besitzt vorzugsweise einen elliptischen Querschnitt mit Breitseiten und Schmalseiten. In den Breitseiten befinden sich die Lageraufnahmen zur Aufnahme des Elastomer-Metall-Lagers.

Unabhängig davon, ob es sich um einen Stahlblechlenker oder um einen Stahlrohrlenker handelt, können bei einer Ausführung als Zug-/Druckstab entweder zwei geschlitzte Elastomer-Metall-Lager oder ein geschlitztes Elastomer-Metall-Lager an einem Ende und ein eingepresstes Kugelgelenkzapfengehäuse an dem anderen Ende des Lenkers montiert sein. Bei einem Kugelgelenkzapfengehäuse handelt es sich um eine Lageranordnung, bei welcher der Kugelgelenkzapfen pendelnd in einer Lagerschale gehalten ist, die wiederum in einer Hülse angeordnet ist, welche in die Lageraufnahme gepresst wird.

Bei dem erfindungsgemäßen Verfahren zur Herstellung einer solchen Lenkeranordnung wird zunächst ein als Hohlprofil ausgebildeter Lenker bereitgestellt. Der Lenker weist in bekannter Weise Lageraufnahmen auf, die jeweils durch ein Paar fluchtender Öffnungen des Hohlprofils gebildet sind. An den Öffnungen sind Durchzüge ausgebildet, die Lagertragflächen zur Aufnahme eines Elastomer-Metall-Lagers bilden. Ferner wird ein Elastomer-Metall-Lager mit einer Außenhülse bereitgestellt, die als offenes Hohlprofil ausgebildet ist und zum Einpressen in die Lageraufnahmen vorgesehen ist. Bevor das Elastomer-Metall-Lager in die Lageraufnahme eingepresst wird, kommt eine Kalibriereinheit zum Einsatz, in welche das Elastomer-Metall-Lager eingelegt wird. Innerhalb der Kalibriereinheit wird das Elastomer-Metall-Lager auf einen gewünschten Außendurchmesser reduziert und unmittelbar aus der Kalibriereinheit in die Lageraufnahme gepresst. In der Kalibriereinheit wird das Elastomer-Metall-Lager gewissermaßen vorgespannt, was die Montage der Lenkeranordnung erheblich vereinfacht. In der Kalibriereinheit wird das Elastomer-Metall-Lager noch nicht auf seinen endgültigen Außendurchmesser reduziert. Dies erfolgt erst in einem zweiten Schritt durch Einpressen in die Lageraufnahme. Hierbei wird ein zweiter Durchmesser erreicht, der kleiner ist als der erste in der Kalibriereinheit eingestellte Durchmesser. Durch den Einpressvorgang werden die Elastomer-Metall-Lager kalibriert und lebensdauerfest gemacht. Das endgültige Kalibrieren bzw. der zweite Schritt des zweistufigen Kalibriervorgangs schließt sich unmittelbar an den ersten Schritt an, so dass das Kalibrieren und Einpressen in einem zeitlich unmittelbar aufeinander folgenden Arbeitsgang erfolgt. Dies führt zu Kosteneinsparung bei der Herstellung einer solchen Lenkeranordnung.

Die Erfindung wird nachfolgend anhand des in den Zeichnungen 1 bis 4 dargestellten Ausführungsbeispiels näher erläutert. Es zeigt:
- Figur 1: eine perspektivische Darstellung eines aus Stahlblech hergestellten Lenkers in Schalenbauweise;
- Figur 2: eine perspektivische Darstellung eines Stahlrohrlenkers mit einzusetzenden Elastomer-Metall-Lagern;
- Figur 3: einen Querschnitt durch eine Lageraufnahme der Figur 2 bei eingesetztem Elastomer-Metall-Lager;
- Figur 4: einen Querschnitt durch eine Lageraufnahme des Lenkers der Figur 1 bei eingesetztem Elastomer-Metall-Lager sowie
- Figur 5 - 10: einen Querschnitt durch verschieden ausgeführte Lageraufnahmen des Lenkers mit eingesetztem Elastomer-Metall-Lager.

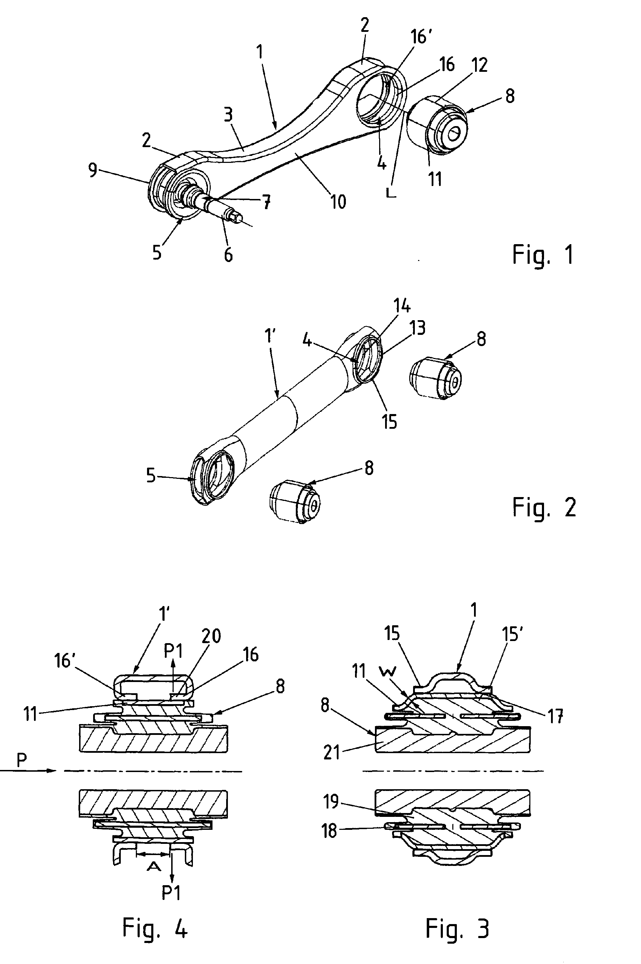

Figur 1 zeigt einen als Zug-/Druckstab ausgebildeten Lenker 1. Das U-förmige Hohlprofil, aus dem der Lenker 1 besteht, ist ein umgeformtes Stahlblech. Dieser Lenker 1 ist eine einstückige, U-förmig konfigurierte Press-Schale. Einstückig bedeutet in diesem Zusammenhang, dass die Press-Schale nicht nur durch stoffschlüssige Verbindungstechniken, sondern ausschließlich durch Umformverfahren in die Endkontur gebracht worden ist.

Es ist zu erkennen, dass der Lenker 1 an seinen beiden Enden 2 jeweils kreisrunde Lageraufnahmen 4, 5 aufweist. In der in der Bildebene linken Lageraufnahme ist ein Kugelgelenkzapfen 6 mit entsprechendem Kugelzapfengehäuse 7 eingepresst. In die andere Lageraufnahme 4 kann das dargestellte Elastomer-Metall-Lager 8 in Richtung seiner Längsachse L eingepresst werden. Der Lenker 1 ist tailliert ausgeführt, d.h., dass er in der Mitte zwischen den beiden Lageraufnahmen 4, 5 eine um ca. 50 % geringere Höhe aufweist als im Bereich der Lageraufnahmen 4, 5. Der Durchmesser der Lageraufnahmen 4, 5 ist dabei wesentlich größer als die in Hochrichtung gemessene Breite der im Abstand zueinander verlaufenden Wände 9, 10. Die Wände 9, 10 sind über einen Steg 3 miteinander verbunden, welcher den Rücken des U-förmigen Hohlprofils bildet. Das dargestellte Elastomer-Metall-Lager 8 zeichnet sich durch eine Außenhülse 11 mit einem Längsschlitz 12 an seiner Oberseite aus. Der Längsschlitz 12 ist hier symbolisch dargestellt. Aus Gründen der Übersichtlichkeit wurde auf die Darstellung einer Kalibriereinrichtung verzichtet, welche die Außenhülse 11 so weit zusammenpresst, dass der Längsschlitz 12 nur noch sehr schmal ist, so dass die Außenhülse 11 in die Lageraufnahme 4 eingepresst werden kann.

Das Ausführungsbeispiel der Figur 2 unterscheidet sich von demjenigen der Figur 1 lediglich durch die Konstruktion des Lenkers. Es handelt sich nicht um ein Schalenbauteil mit U-förmigem Querschnitt, sondern um einen Stahlrohrlenker. Der Lenker 1' besitzt prinzipiell die gleichen Komponenten wie der Lenker 1 der Figur 1, so dass die bereits eingeführten Bezugszeichen auch für diesen Lenker verwendet werden.

Die Lageraufnahmen 4, 5 können zur Aufnahme der gleichen Elastomer-Metall-Lager 8 vorgesehen sein, wie sie in Figur 1 dargestellt sind. In diesem Ausführungsbeispiel können beispielhaft zwei solcher Elastomer-Metall-Lager 8 in die Lageraufnahmen 4, 5 eingepresst werden. Auf Grund der rohrförmigen Profilierung besitzt der Lenker 1' zwischen den Lageraufnahmen 4, 5 einen im Wesentlichen gleich bleibenden Querschnitt, der nur im Übergangsbereich zu den Lageraufnahmen 4, 5 verändert wird. Der Querschnitt ist elliptisch, so dass Breitseiten und Schmalseiten vorhanden sind. In den Breitseiten sind die Lageraufnahmen 4, 5 angeordnet. Ein Unterschied zu der Ausführungsform der Figur 1 ist, dass die fluchtenden Öffnungen 13, 14, welche die Lageraufnahmen 4, 5 bilden, mit Durchzügen 15, 15' versehen sind, die anders als die Durchzüge 16, 16' der Figur 1 nach außen weisen und nicht nach innen. Dies wird anhand der Figuren 3 und 4 noch deutlicher.

Figur 3 zeigt den Querschnitt durch die Lageraufnahme 4 bei einem rohrförmigen Lenker 1', wie er in Figur 2 dargestellt ist. Es ist zu erkennen, dass die Durchzüge 15, 15' jeweils voneinander weg weisen, d.h. nach außen gerichtet sind. Die Durchzüge 15, 15' bilden zylindrische Lagertragflächen 17 aus, an denen sich die Außenhülse 11 des eingepressten Elastomer-Metall-Lagers 8 abstützt. Die Außenhülse besitzt die Wandstärke W. In diesem Fall besitzt das Elastomer-Metall-Lager 8 ein zusätzliches metallisches Zwischenblech 18, das sich zwischen der Außenhülse 11 und der Innenhülse 21 befindet. Die verbleibenden Zwischenräume zwischen der Außenhülse 11 und der Innenhülse 21 sind im Wesentlichen durch ein Elastomer 19 ausgefüllt, das durch Vulkanisation mit den angrenzenden Metallbauteilen verbunden ist.

Die Ausführungsform der Figur 4 unterscheidet sich von derjenigen der Figur 3 dadurch, dass die Durchzüge 16, 16' nach innen weisen. Die scharfkantigen freien Enden 20 können je nach Einpressrichtung den Einpressvorgang behindern. Daher ist vorgesehen, dass bei einer Einpressrichtung gemäß des Pfeils P der in der Bildebene rechte Durchzug 16 an seinem freien Ende 20 in Richtung der Pfeile P1 etwas aufgetulpt, d.h. im Durchmesser erweitert, ist. Hierdurch wird eine Einführschräge geschaffen, die das Einpressen des Elastomer-Metall-Lagers 8 erleichtert. Es ist zu erkennen, dass bei dieser Ausführungsform eine wesentlich kürzere Außenhülse 11 zum Einsatz kommen kann als bei der Ausführungsform der Figur 3. Weiterhin ist in Figur 4 gezeigt, dass zwischen den Durchzügen ein freier Raum entsteht, wobei dieser freie Raum durch den Abstand A gekennzeichnet ist. Im Rahmen der Erfindung ist unter dem freien Raum jeweils der Längenabschnitt zu verstehen, der zwischen den Durchzügen 16 und 16' liegt bzw. zwischen den Fortsätzen der Durchzüge 16, 16'. Es ist also ein Bereich, in dem die Außenhülse 11 nicht mit einem Widerlager zur Anlage kommt.

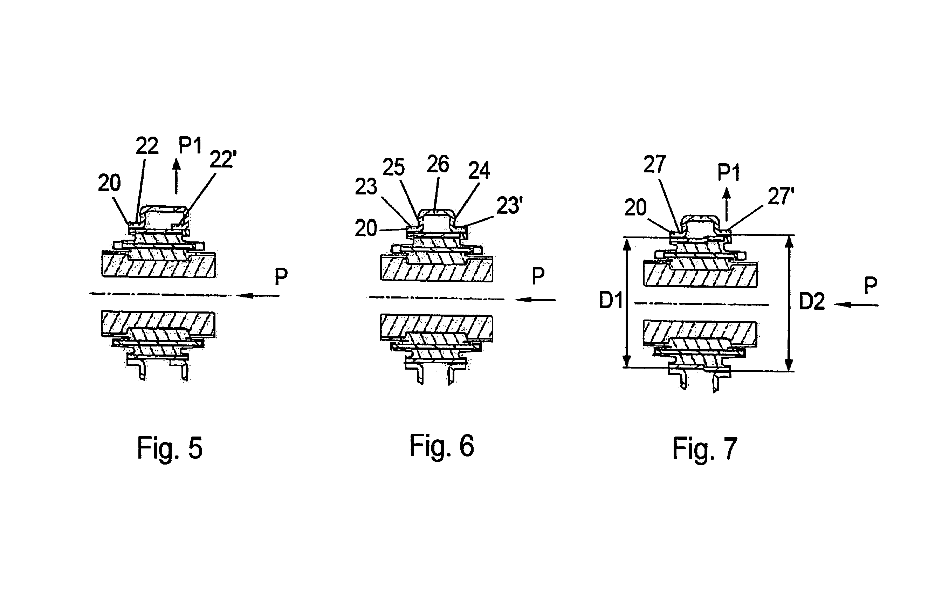

Die Figuren 5 und 6 zeigen jeweils einen Querschnitt durch eine Lageraufnahme eines U-förmigen Lenkers 1 wie er in Figur 1 dargestellt ist. Dabei weisen Durchzüge 22, 22' der in Figur 5 dargestellten Ausführungsform in Einpressrichtung gemäß des Pfeils P. Die Durchzüge 23, 23' der Ausführungsform in Figur 6 weisen mit ihren freien Enden 20 voneinander weg. Dabei bilden die Wände 24, 25 mit dem Steg 26 ein Omega-förmiges Profil.

In Figur 7 weisen die freien Enden 20 der Durchzüge 27, 27' wie in Figur 6 ebenfalls voneinander weg. Allerdings ist der Durchmesser D1 des in der Bildebene linken Durchzugs 27 kleiner als der Durchmesser D2 des in der Bildebene rechten Durchzugs 27'. Dadurch wird die Zu- bzw. Einführung erleichtert, da das Elastomer-Metall-Lager ebenfalls über die Zylinderlänge abgesetzte Durchmesser aufweist. Auf diese Weise wird der kleinere Durchmesser des Elastomer-Metall-Lagers tatsächlich auch nur in den kleineren Durchmesser des Lenkers eingepresst. Der größere Durchmesser folgt.

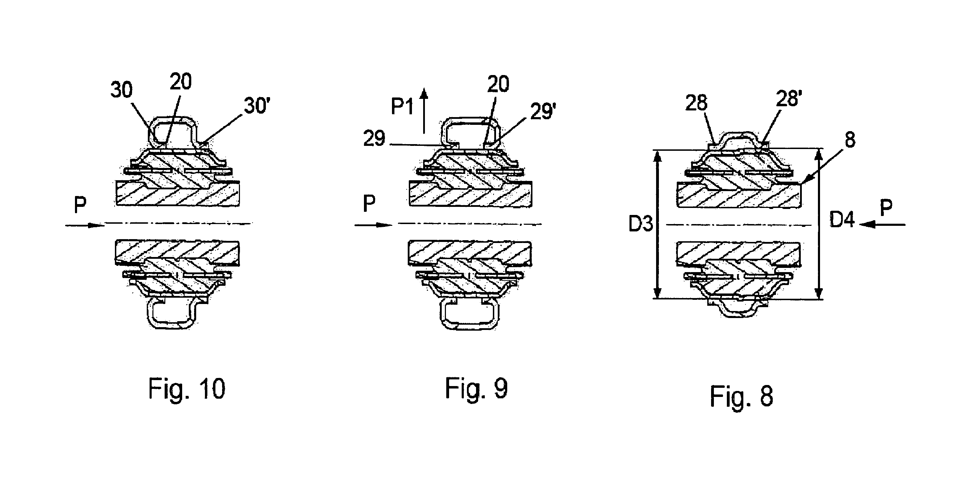

Figur 8 zeigt eine der Figur 7 ähnliche Ausführungsform für eine Lageraufnahme 4 bei einem rohrförmigen Lenker 1' wie er in Figur 2 dargestellt ist. Auch hier ist der Durchmesser D3 des in der Bildebene linken Durchzugs 28 kleiner als der Durchmesser D4 des in der Bildebene rechten Durchzugs 28'.

Die Figuren 9 und 10 zeigen weitere Ausführungsformen für eine Lageraufnahme 4 eines rohrförmigen Lenker 1'. Dabei weisen die in Figur 9 dargestellten freien Enden 20 der Durchzüge 29, 29' zueinander, wobei das in der Bildebene rechte freie Ende 20 in Richtung des Pfeils P1 etwas aufgetulpt ist, um das Einpressen des Elastomer-Metall-Lagers 8 in Richtung des Pfeils P zu erleichtern. Die freien Enden 20 der Durchzüge 30, 30' in Figur 10 weisen beide in Einpressrichtung des Pfeils P des Elastomer-Metall-Lagers 8.

### Bezugszeichen:

- 1 -: Lenker
- 1'-: Lenker
- 2 -: Ende
- 3 -: Steg
- 4 -: Lageraufnahme
- 5 -: Lageraufnahme
- 6 -: Kugelgelenkzapfen
- 7 -: Kugelzapfengehäuse
- 8 -: Elastomer-Metall-Lager
- 9 -: Wand
- 10 -: Wand
- 11 -: Außenhülse
- 12 -: Längsschlitz
- 13 -: Öffnung
- 14 -: Öffnung
- 15 -: Durchzug
- 15'-: Durchzug
- 16 -: Durchzug
- 16'-: Durchzug
- 17 -: Lagertragfläche
- 18 -: Zwischenblech
- 19 -: Elastomer
- 20 -: freies Ende
- 21 -: Innenhülse
- 22 -: Durchzug
- 22' -: Durchzug
- 23 -: Durchzug
- 23' -: Durchzug
- 24 -: Wand
- 25 -: Wand
- 26 -: Steg
- 27 -: Durchzug
- 27' -: Durchzug
- 28 -: Durchzug
- 28' -: Durchzug
- 29 -: Durchzug
- 29' -: Durchzug
- 30 -: Durchzug
- 30' -: Durchzug

- A -: Abstand
- P -: Pfeil
- P1 -: Pfeil
- D1 -: Durchmesser v. 27
- D2 -: Durchmesser v. 27'
- D3 -: Durchmesser v. 28
- D4 -: Durchmesser v. 28'
- L -: Längsachse zu 8.
- W -: Wandstärke

## Patentansprüche

1. Lenkeranordnung als Bestandteil einer Achskomponente mit einem als Hohlprofil ausgebildeten Lenker (1, 1'), wobei der Lenker (1, 1') Lageraufnahmen (4, 5) aufweist, die jeweils von einem Paar fluchtender Öffnungen (13, 14) des Hohlprofils gebildet sind, wobei an den Öffnungen (13, 14) Durchzüge (15, 15'; 16, 16'; 22, 22'; 23, 23'; 27, 27'; 30, 30') ausgebildet sind, die Lagertragflächen (17) zur Aufnahme eines Elastomer-Metall-Lagers (8) bilden, wobei das Elastomer-Metall-Lager (8) eine sich an den Lagertragflächen (17) abstützende Außenhülse (11) aufweist, **dadurch gekennzeichnet, dass** die Außenhülse (11) ein umfangsseitiges offenes Hohlprofil ist.

2. Lenker nach Anspruch 1, **dadurch gekennzeichnet, dass** das Elastomer-Metall-Lager (8) derart ausgebildet ist, dass es beim Einpressen in eine Lageraufnahme (4, 5) zum Kalibrieren im Durchmesser reduziert wird.

3. Lenkeranordnung nach Anspruch 1 oder 2, **dadurch gekennzeichnet, dass** ein Abstand (A) zwischen den Durchzügen ausgebildet ist, wobei der Abstand (A) eine Länge von bis zu 20 mm aufweist.

4. Lenkeranordnung nach einem der Ansprüche 1 bis 3, **dadurch gekennzeichnet, dass** die Durchzüge (15, 15'; 16, 16'; 23, 23'; 27, 27'; 28, 28'; 29, 29') in entgegengesetzte Richtung weisen, wobei wenigstens einer der Durchzüge (15, 16, 23, 27', 28, 29) an seinem freien Ende (20) eine Einführschräge für ein einzupressendes Elastomer-Metall-Lager (8) aufweist.

5. Lenkeranordnung nach Anspruch 4, **dadurch gekennzeichnet, dass** die Einführschrägen einen Winkel zwischen 20 und 40 Grad zu einer Längsachse (L) des Elastomer-Metall-Lagers (8) aufweisen.

6. Lenkeranordnung nach einem der Ansprüche 1 bis 5, **dadurch gekennzeichnet, dass** die Außenhülse (11) eine Wandstärke (W) aufweist, wobei die Wandstärke (W) kleiner gleich 2,5 mm ist.

7. Lenkeranordnung nach einem der Ansprüche 1 bis 6, **dadurch gekennzeichnet, dass** die Durchzüge (16, 16, 29, 29') nach innen weisen, wobei wenigstens einer der gegenüberliegenden Durchzüge (16, 16', 29, 29') an seinem freien Ende (20) aufgetulpt ist.

8. Lenkeranordnung nach einem der Ansprüche 1 bis 7, **dadurch gekennzeichnet, dass** die Wandstärke der Außenhülse (11) so groß gewählt ist, dass der Längsschlitz (12) in den von den Lagertragflächen (17) unterstützten Bereichen das gleiche Spaltmaß aufweist wie in den nicht von Lagertragflächen (17) unterstützten Bereichen.

9. Lenkeranordnung nach einem der Ansprüche 1 bis 8, **dadurch gekennzeichnet, dass** der Lenker (1, 1') aus einer einteiligen, im Querschnitt U-förmigen Blechschale oder aus einem umfangsseitig geschlossenen Rohrprofil besteht.

10. Verfahren zur Herstellung einer Lenkeranordnung mit den Merkmalen von mindestens einem der Patentansprüche 1 bis 9:
a) Bereitstellen eines als Hohlprofil ausgebildeten Lenkers (1, 1'), wobei der Lenker Lageraufnahmen (4, 5) aufweist, die jeweils von einem Paar fluchtender Öffnungen (13, 14) des Hohlprofils gebildet sind, wobei an den Öffnungen (13, 14) Durchzüge (15, 15'; 16, 16'; 23, 23'; 27, 27'; 28, 28'; 29, 29') ausgebildet sind, die Lagertragflächen (17) zur Aufnahme eines Elastomer-Metall-Lagers (8) bilden,
b) Bereitstellen eines Elastomer-Metall-Lagers mit einer als offenes Hohlprofil ausgebildeten Außenhülse (11) zum Einpressen in die Lageraufnahmen (4, 5),
c) Einlegen des Elastomer-Metall-Lagers (8) in eine Kalibriereinheit zum Reduzieren des Außendurchmessers des Elastomer-Metall-Lagers (8) auf einen ersten Durchmesser,
d) Verschieben des in der Kalibriereinheit umfangsseitig vorgespannten Elastomer-Metall-Lagers (8) aus der Kalibriereinheit in die Lageraufnahme (4, 5).

11. Verfahren nach Anspruch 10, **dadurch gekennzeichnet, dass** das Elastomer-Metall-Lager (8) durch Einpressen in die Lageraufnahme (4, 5) von dem ersten Durchmesser auf einen kleineren, zweiten Durchmesser kalibriert wird.
